# EUROPÄISCHE PATENTSCHRIFT

(11) **EP 1 374 676 B1**
(45) Veröffentlichungstag und Bekanntmachung des Hinweises auf die Patenterteilung: **02.08.2006**
(21) Anmeldenummer: 03009077.3
(22) Anmeldetag: 19.04.2003
(51) Int. Cl.: A01M 1/22

(54) **Anordnung und Verfahrensweise zur Abtötung von holzzerstörenden Insekten und Pilzen und zur Behandlung von schadstoffbelasteten Materialien**
System and method for killing wood-destroying insects and mushrooms and for treating infected materials
Système et méthode pour éliminer les insectes et champigons destructeurs du bois et pour traiter les matériaux infectés

(30) Priorität: 17.06.2002 EP 02012700
(43) Veröffentlichungstag der Anmeldung: 02.01.2004
(73) Patentinhaber: Hofmann, Silvia, 07973 Greiz (DE); Steinbach, Steffen, 15749 Mittenwalde, OT Motzen (DE)
(72) Erfinder: Hofmann, Silvia, 07973 Greiz (DE); Steinbach, Steffen, 09648 Altmittweida (DE); Klein, Erhard, 15732 Schulzendorf (DE); Unger, Achim, Dr.rer.nat, 16225 Eberswalde (DE)
(74) Vertreter: Horn, Klaus

(56) Entgegenhaltungen:
- WO-A-01/52604
- DE-A- 3 405 009
- DE-A- 4 420 649
- DE-A- 19 850 195
- US-A- 4 632 742
- US-A- 4 795 871
- US-A- 4 980 039
- US-A- 5 639 414

## Beschreibung

Die Erfindung betrifft das technische Gebiet des Materialschutzes, insbesondere des Holz-, Bausubstanz- und Kulturgutschutzes, in dem durch Behandlung von schädlingsbefallenen bzw. schadstoffbelasteten Gütern bzw. Objekten mit Mikrowellenenergie ihre Sanierung erreicht wird.

Für die vorgenannte Zweckbestimmung, ausgenommen der Schutz und die Behandlung von Kulturgut, sind Geräte bzw. Anordnungen bekannt, die allesamt mit einer durch eingebrachte Mikrowellenenergie und einer im bestrahlten Gut bzw. Objekt vorhandenen Feuchtigkeit bewirkten Er- bzw. Überhitzung arbeiten. Die Er- bzw. Überhitzung in den organischen Bestandteilen der Schädlinge bewirken deren Abtötung ohne die umgebende Substanz zu schädigen.
Es wurde eine Vielzahl von Geräten und Anordnungen zur Trocknung von Stoffen oder Bauwerksteilen wie auch zur Bekämpfung von Schädlingen in der Bausubstanz, da für beide Zweckbestimmung gleichermaßen gut geeignet und teilweise auch gleichermaßen vorgesehen, offenbart.
Einer ersten Gruppe von technischen Lösungen gehören solche an, bei denen eine die Mikrowellen aussendende Antenne starr bzw. fest und unmittelbar am Magnetron, auch als Mikrowellengenerator, Generator oder HF-Generator bezeichnet, angeordnet ist. Hierzu gehören z.B. die Schriften WO 95/23945, EP 0 807 235 B1, DE 38 04 052 A1, DE 44 20 649 A1, DE 93 14 554 U1, DE 94 13 736 U1, DE 297 05 222 U1, DE 297 06 207 U1, DE 298 18 545 U1 oder die Firmenschrift _{"}Speidel-Microtec Mikrowellen-Trocknung", Prospekt mit der Kennzeichnung bzw. Datierung _{"}Copyright © 1999 by Speidel". Solche Apparaturen sind wenig flexibel in ihrer Einsetzbarkeit, da sie durch die starre Anordnung bzw. Verbindung von Magnetron bzw. Generator und Antenne nicht geeignet sind, Mikrowellenbestrahlungen an schwer oder nicht zugänglichen Stellen durchzuführen. Sie sind nur für großräumige oder großflächige Bestrahlungen und dies bei groß- und freiräumigen Bedingungen, dort wo sie z.B. als selbstfahrende Geräte arbeiten können, einsetzbar.
Eine zweite Gruppe von technischen Lösungen sind durch die Schriften DE 39 15 750 C2, DE 198 50 195, A1 oder DE 44 20 649 A1 offenbart. Diese Anordnungen bzw. Geräte sind dadurch gekennzeichnet, dass hierbei in Weiterentwicklung der Geräte der v.g. ersten Gruppe eine Trennung von Generator und Antenne vorgenommen wurde, d.h., dass die die Mikrowellen aussendende Antenne nicht fest mit dem Magnetron, sondern über eine flexible Verbindungsleitung mit ihm verbunden ist. Dadurch wird ihr Einsatz an den Stellen möglich, wo die Geräte der ersten hier beschriebenen Gruppe versagen.
Allen v.g. Anordnungen und teilweise beschriebenen Verfahrensweisen ist zunächst erst einmal gemeinsam, dass Er- oder Überhitzung als Resultat der Wirkungsweise von Mikrowellen beim Auftreffen auf Wassermoleküle in Stoffen ausgenutzt wird. Neben der Trocknung durch Erhitzung von Stoffen ist für die Bekämpfung bzw. die Abtötung von Schädlingen das Überhitzen von deren organischen Anteilen besonders in den Mittelpunkt der Schädlingsbekämpfung gerückt, da damit besonders umweltfreundlich, zumindest aber umweltschonend, gearbeitet werden kann.
Beiden Gruppen von Mikrowellenbestrahlungsgeräten ist gemeinsam, dass sie bekanntermaßen mit Strom- bzw. Spannungsversorgern, Verbindungsleitungen, Steuer- und Regelgeräten, durch welche die elektrische Energie gesteuert und geregelt wird, Abschirmelementen, Alarmgebern und gegebenenfalls mit einer Fernsteuerung bzw. Fernzu- und - abschaltung versehen sind.
Allen v.g. Offenbarungen, ist weiterhin gemeinsam, dass sie mit einer einzigen Antenne, auf die ein einziges jeweils zugehöriges Magnetron bzw. Generator seine erzeugte hochfrequente Energie liefert, großflächige wie auch punktuelle Bestrahlungen vornehmen können oder dass beim Einsatz mehrerer Antennen bzw. Antenne-Generator-Konfigurationen diese in gleicher Richtung arbeiten (müssen). Auch sondenartige Einsätze sind bekannt.
Diese Anordnungsart der Bestrahlung liefert eine asymmetrische Temperaturverteilung im bestrahlten Objekt mit sehr stark ausgeprägten Temperaturspitzen, weil eine einseitige Mikrowelleneinleitung ausgeführt wird. In der Praxis sind dadurch schon unvermutete Überhitzungen im Innern der bestrahlten Objekte entstanden, die beispielsweise bei der Bestrahlung von Hölzern zur, zunächst unerkannten, Brandauslösung führten. Andererseits ist in bestimmten Bereichen der Hölzer wegen dort fehlender ausreichender Erwärmung die Abtötung der Schädlinge ausgeblieben.
Als nächstgelegener Stand der Technik zur nachbeschriebenen Erfindung ist die Anordnung nach der technischen Lösung gemäß DE-A 34 05 009, DE 44 20 649 A1 und DE 198 50 195 A1 zu benennen. Die Anordnung nach DE 44 20 649 A1 ist gekennzeichnet durch die Anordnungsbestandteile Stromversorgungsanlage, verbunden mit einem Steuer- und Regelgerät, an welches wiederum eine drahtbetriebene Fernsteuerung zur Ein-/Ausschaltung, als Alarmgeber dienender Feldprüfkopf und der sogenannte Bestrahlungskasten mit Magnetron angeschlossen sind. Strahlungsaussendende Elemente - Antennen - erwähnt jedoch diese Schrift nicht, dafür aber die prinzipiell gleich aufgebaute Anlage nach Schrift DE 198 50 195 A1 mit der Bezeichnung Strahlkopf, in welchem ein Temperatursensor zu Ermittlung der Temperatur auf der Holzoberfläche untergebracht ist. Die Erwärmung des zu behandelnden Gutes wird gemäß der Druckschrift DE 44 20 649 A1 durch eine Zeitkonstante, die am Steuer- und Regelgerät eingestellt wird, unter ihrem "kritischen Flammpunkt" gehalten, indem, wie die Schrift weiter ausführt, im Steuergerät eine zeitlich begrenzte Zufuhr elektrischer Energie zum Magnetron erfolgt. An den Bestrahlungskasten gem. DE 44 20 649 A1 sind Feldelektroden angeschlossen, die sich am zu bestrahlenden Gut gegenüberstehen. Diese Feldelektroden bilden offensichtlich nur einen Kondensator mit einem Wechselfeld. Sollten jedoch diese in der Schrift so genannten Feldelektroden als Mikrowellenstrahlung aussendende Antennen wirken, so wäre diese so dargestellte technische Lösung funktionsunfähig, da sich zwei Mikrowellen ausstrahlende Elemente gegenüberstehen und gegenseitig mit Mikrowellen beaufschlagen und dadurch eine Überhitzung und zwangsläufig ein Funktionsausfall entstünde. Eine weitere Figur dieser Schrift soll ein Gegenstrahlprinzip darstellen. Auch hierbei wird wohl Funktionsunfähigkeit festzustellen sein, da zwischen dem zu behandelnden Gut und dem Bestrahlungskasten ein Reflektor in Form einer Aluminium-Folie angeordnet wurde, wodurch die Mikrowellenstrahlung das zu behandelnde Gut wegen dieser reflektierenden Abschirmung überhaupt nicht erreichen kann und auf Grund der Mikrowellenreflexion diese sogar in das Magnetron zurückstrahlt, dieses Magnetron überhitzt und zum Funktionsausfall führen muss. Weitere hier nicht interessierende Prinzipdarstellungen sind enthalten.
Im Materialschutz wurden in der Vergangenheit in erheblichem Umfang mit hoher Konzentration Schädlingsbekämpfungs- und Holzschutzmittel auf der Basis von Organochlorverbindungen wie 1,4-Dichlorbenzen, Chlornaphthalen, DDT, Lindan, PCP, Aldrin, Dieldrin aber auch anorganische Arsen- und Quecksilberverbindungen wie Arsenik/Arsenale sowie Sublimat eingesetzt, die aus human- und ökotoxikologischen sowie restauratorischen Gründen wieder entfernt werden müssen. Bisher wird versucht, die gesundheitsgefährdenden Stoffe z. B. durch spezielle Lösungsmittel zu entfernen oder durch Maskierungsmittel am Eintritt in die Raumluft zu hindern. Es werden auch z.B. Organochlor-Verbindungen in Abhängigkeit von ihrem Dampfdruck durch eine Temperaturerhöhung, oftmals in Verbindung mit einem Einhausen oder in Behältnissen, die über geeignete Luftabführungen, incl. -reinigung verfügen müssen, aus den damit belasteten Materialien, wie Holzobjekte, Textilien, Bücher, Ledertapeten und -schuhe, ethnografische Gegenstände, Pelze, Vogelbälge oder Herbarien, teilweise entfernt, indem sie von außen nach innen z.B. mit warmer oder heißer Luft behandelt werden. Diese Erwärmung ist wie bei der o.g. Bekämpfung bzw. beim Abtötung von organischen Schädlingen nicht gleichmäßig und liefert eine asymmetrische Temperaturverteilung im Objekt. Tiefer liegende Schichten werden unzureichend erwärmt und folglich unzureichend vom Gefahrstoff entlastet. Bei belasteten Gebäudeteilen, wie z.B. Dachstühlen, muss wie bei der Abtötung von Schadorganismen nach bisherigem Stand der Technik der gesamte Raum mit hohem Aufwand aufgeheizt werden. Dabei ist außerordentlich nachteilig, dass die zu behandelnde Konstruktion einzuhausen ist. Im Weiteren besteht der Nachteil bzw. Mangel darin, dass Biozide mit niedrigem Dampfdruck, wie DDT, Arsenik und Sublimat nur unzureichend ausgasen.

Von den Mängeln und ihren Ursachen beim oben dargestellten Stand der Technik ausgehend, liegt der Erfindung die Aufgabe zugrunde, eine Anordnung und ein Verfahrensweise bereitzustellen, welche es ermöglichen, Holz und andere Bausubstanz an wenig zugänglichen oder nahezu unzugänglichen Stellen mit Mikrowellen zum Zwecke der Vernichtung von in diesen Objekten befindlichen Insekten, Pilzen und Bakterien bzw. zum Zwecke der Entfernung von in diesen Objekten befindlichen Schadstoffen, wie z.B. Biozide, (Dekontamination) zu beaufschlagen und dabei ein über die Objektausdehnung gleichmäßig verlaufendes Temperaturprofil in gewünscht festlegbaren und kontrollierbaren Größenmaße zu erhalten und dadurch eine Garantie der sicheren Vernichtung bzw. gleichmäßigen und weitreichenden Dekontamination zu erreichen, somit die o.g. Nachteile zu überwinden.

Erfindungsgemäß wird diese Aufgabe dadurch gelöst, dass zwei Magnetrone, hier auch als Mikrowellengeneratoren bzw. kurz als Generatoren bezeichnet, mit den diesen einzelnen Generatoren direkt zugeordneten Antennen oder nur diese Antennen selbst am zu bestrahlenden Objekt auf einer gemeinsamen Linie, die die beiden Antennenachsen zusammenfallend bilden, direkt gegenüberstehend und gegeneinander gerichtet, angeordnet sind. Bei dieser Anordnung würden sich die Antennen bzw. die Antenne-Generator-Konfigurationen jedoch gegenseitig bestrahlen und einen Funktionsausfall hervorrufen, was jedoch durch eine ebenso erfindungsgemäße, den Generatoren vorgeschaltete Steuerung und mit der der Anordnung zwangsläufig verbundenen Verfahrensweise ausgeschlossen ist.

Es können auch mehrere Antennen, in beliebigen Winkeln zueinander, angeordnet sein. Vier sich jeweils paarweise gegenüberstehende Antennen sind im Winkel von 90°, also rechtwinklig zueinander, angeordnet und drei sich winklig gegenüberstehende Antennen können dann im Winkel von 120° zueinander angeordnet sein. Ein oder mehrere Temperatursensoren sind im zu bestrahlenden Objekt angeordnet und einer Auswerteeinheit zugeschaltet. Durch die in einem Rechner entsprechend eines speziellen Programms verarbeiteten Signale der Temperatursensoren und vermittels der zwischen die Rechner- und Auswerteeinheit und die Generatoren geschalteten und als vorbekannt anzusehenden Geräte zur Regelung und Steuerung wird das Betriebsregime der Generatoren genau auf die im Objekt benötigten Temperatur, einschließlich des Temperaturverlaufes, eingestellt.
Erfindungsgemäß wird im Weiteren diese Aufgabe verfahrensmäßig dadurch gelöst, dass eine gegeneinander arbeitende Mikrowellenausstrahlung aus am Objekt bzw. am zu bestrahlenden Gut gegenüberstehenden Generatoren so vorgenommen wird, dass sie zeitlich asynchron, d.h. abwechselnd aus jeweils einem Generator abstrahlt. Dies wird bewirkt durch das Steuergerät mit einer Timesharing-Ansteuerung der Generatoren mittels netzsynchroner Ansteuerung im Halbwellenbetrieb. Eine gegenseitige Hochfrequenzbeeinflussung der Generatoren durch die Steuerungsschritte der Steuereinrichtung wird dadurch gezielt ausgeschlossen. Durch die Aufschaltung einer Steuerspannung auf die Steuerung im Bereich von ca. 0 bis ca. 10 V wird die abgegebene Mikrowellenleistung eines Generators durch Änderung des Tastverhältnisses gesteuert. Die Aufgabe der notwendigen Steuerspannung für die Einstellung des Tastverhältnisses und der damit abgegebenen Mikrowellenleistung kann per Hand oder durch externe Einspeisung in das Steuergerät erfolgen, wobei die externe Einspeisung die Grundlage für eine temperaturgeregelte Anordnung darstellt.
Durch die zu verarbeitenden Signale der Temperatursensoren in o.g. Gesamtanordnung nimmt die Verfahrensweise auch eine Temperatureinstellung in gewünschtem Profil und gewünschter Höhe im bestrahlten Objekt vor, wobei durch die Auswerteeinheit in Verbindung mit der Reglereinrichtung deren Vorgaben und Bedingungen an das Steuergerät weitergegeben werden.
Der entscheidendste Mangel, dass die bei bisher ausschließlich mit einer Antenne oder mit einer Antennen-Generator-Konfiguration von nur einer Seite in das Objekt eindringende Mikrowellenstrahlung eine ungleichmäßige Temperaturverteilung im Objekt entstehen lässt, mit teils zu hohen Temperaturen auf der der Strahlungsquelle zugewandten Seite und mit nicht ausreichender Temperatur auf der der Strahlung abgewandten Seite, ist mit diesem erfindungsgemäßen Vorschlag abgestellt. Die vorteilhafteste Wirkung dieser vorgeschlagenen technischen Lösung ergibt sich insbesondere durch die im innern in ihrer Höhe festlegbare, über den Objektquerschnitt gleichmäßig verteilbare und nicht mehr zur Gefahr der Entzündung führende Objekttemperatur bei der Mikrowellenbehandlung. Die Mikrowellenbehandlung eines Objektes von zwei gegenüberliegenden Seiten oder von mehreren Seiten hat eine Überlagerung der thermischen Wirkungen und somit eine homogenere Wärmeverteilung zur Folge. Eine weitere vorteilhafte Wirkung besteht darin, dass die Behandlung von stärkeren Objekten möglich ist. Zur Gewährleistung der Austauschbarkeit der Generatoren wird die vorgeschlagene Betriebsweise durch geeignete Schaltungsmaßnahmen im Steuergerät abgesichert.
Überraschender Weise wurde gefunden, dass es möglich ist, mittels Mikrowelleneinwirkung an Materialien, Objekten und Gütern den Zweck einer Dekontamination dieser Materialien, Objekte und Güter zu erreichen. Bei dieser neuen und erfinderischen Anwendung von Mikrowellen, bei gleichfalls neuer Zweckbestimmung, werden die vorgenannten Anordnungs- und Verfahrensmerkmale erfolgreich eingesetzt. Im Zuge der Mikrowelleneinwirkung werden die frei gesetzten Schadstoffe aus- oder abgewaschen und/oder adsorptiv gebunden.

Nachfolgendes Ausführungsbeispiel 1 und 2 soll die Erfindung näher erläutern.

Es zeigen:
- Fig. 1:: eine gegenstrahlig arbeitende Anordnung mit zwei Antenne-Generator-Konfigurationen (starr verbundene Hornantenne mit Generator), aber nicht gemäß der Erfindung,
- Fig. 2:: eine gegenstrahlige Anordnung mit jeweils zwei Flachantennen, die über flexible Verbindungsleitungen mit je einem Generator verbunden sind,
- Fig. 3:: eine Darstellung der Temperaturverteilung über den Querschnitt des bestrahlten Objektes,
- Fig. 4:: eine winklig zueinander arbeitende Anordnung mit drei Flachantennen, die, über flexible Verbindungsleitungen mit je einem Generator verbunden sind,

### Ausführungsbeispiel 1:

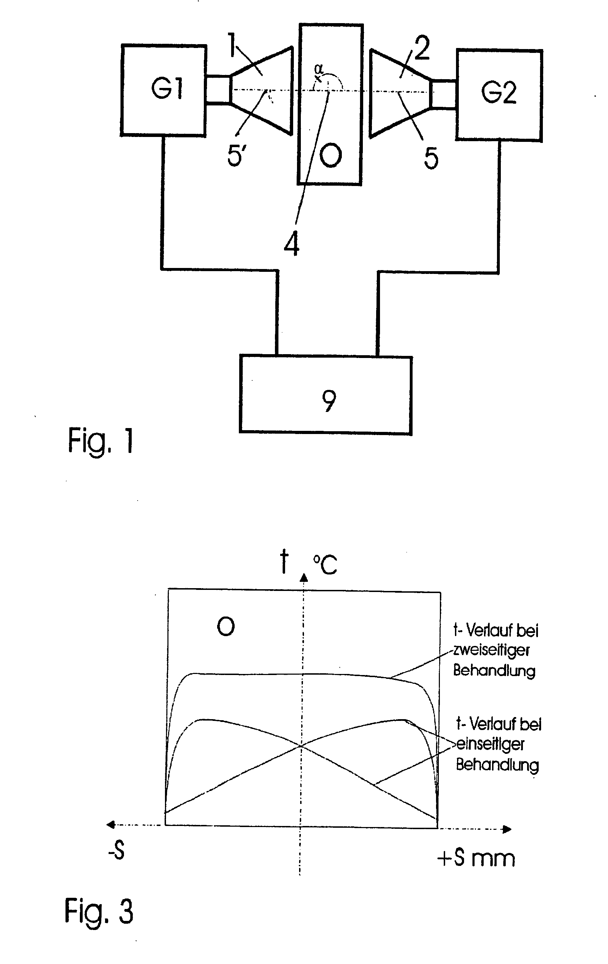

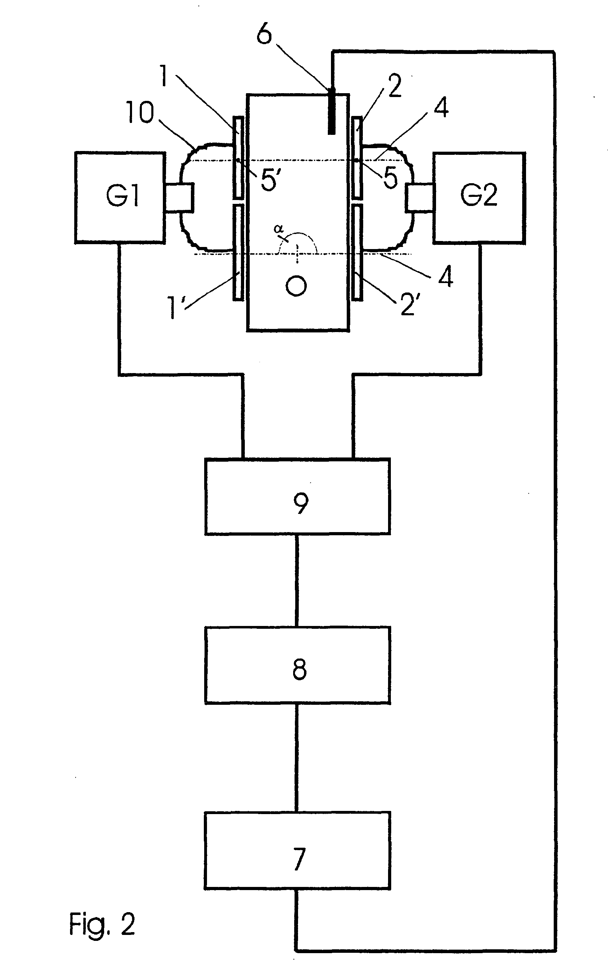

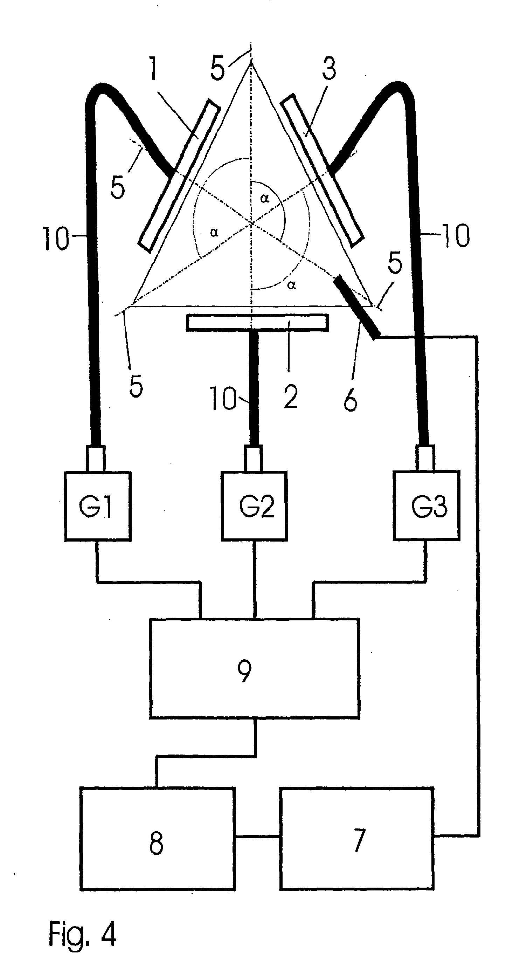

Die Anordnung stellt in Fig. 1 eine herkömmliche Antenne-Generator-Konfiguration G 1 + 1, G 2 + 2 dar, aber nicht gemäß der Erfindung, die jedoch am zu behandelnden Objekt O sich auf einer gemeinsamen Verbindungslinie 4 gegenüber liegend gegenseitig bestrahlen und damit zerstören würden, wenn nicht erfindungsgemäß vermittels einer Steuerung ein alternierender Halbwellenbetrieb vorgesehen wäre. Bei dieser Betriebsweise tritt keine gegenseitige Beeinflussung der Antennen-Generator-Konfiguration G 1 + 1, G 2 + 2 ein und die Erwärmung im Objekt O wird beidseitig gleichmäßig und sich addierend zu einem gleichmäßigem Temperaturprofil gem. Fig. 3 aufgebaut. Durch die Signale des Temperatursensors 6, dargestellt in Fig. 2, und deren weiteren Verarbeitung gem. Fig. 2 wird die Gesamtanordnung so gesteuert, dass neben dem gleichmäßigen Temperaturprofil auch die gewünschte Temperaturhöhe kontrolliert entsteht, wodurch die Gewähr für die sichere Abtötung der Insekten und Pilze garantiert ist. Die Fig. 2 stellt eine Anordnung dar, bei der je zwei Flachantennen 1, 1', 2, 2', die sich gleichfalls auf der Verbindungslinie 4 ihrer beiden Achsen 5, 5' befinden, gegenüberstehen. Diese Flachantennen 1, 1', 2, 2' sind über eine flexible Verbindungsleitung 10 mit ihren zugehörigen Generatoren G 1, G 2 verbunden. Diese wiederum erhalten ihre Signale über das Steuergerät 9 mit LC-Steuerung. Die vom oben benannten Temperatursensor 6, der im zu bestrahlenden Objekt O eingebracht ist, gelieferten Signale werden in der Auswerteeinheit 7 konvertiert und an das Regelgerät 8 und weiter an das Steuergerät 9 weitergegeben. In Fig. 4 ist sodann eine Anordnung mit drei Flachantennen 1, 2, 3 dargestellt. Hierbei ergibt sich keine direkte

Gegeneinanderstrahlung, sondern eine im Winkel α, mit hierbei α = 120°, stehende Konstellation der Antennen und damit der Mikrowellenstrahlungs-Richtung zueinander. Im übrigen ist der Anordnungsaufbau, gleichfalls mit flexiblen Verbindungsleitungen 10 zwischen den Flachantennen 1, 2, 3 und den Generatoren G 1, G 2, G 3 , analog zu Fig. 2, vorgesehen.

### Ausführungsbeispiel 2:

Ausführungsbeispiel 2 soll den Einsatz der Anordnung und des Verfahrens zur Behandlung von mit Schadorganismen wie holzzerstörende Insekten und Pilze befallenen Materialien wie z.B. Hölzer und zur Dekontamination von schadstoffbelasteten Objekten und Gütern, so auch Kulturgütern, näher erläutern.

### 1. Vernichtung von Materialschädlingen

Unter Anwendung der Anordnung nach Fig.2 wird ein Dachstuhlgebälk, hier O, mit Flachantennen 1, 1', 2, 2' bestückt und eine gegeneinander arbeitende Mikrowellenausstrahlung vorgenommen. Die Erwärmung des Einzelbalkens O erfolgt hierbei schrittweise und dabei rasterförmig. Die Temperatureinstellung im gewünschten Profil und in gewünschter Höhe im bestrahlten Objekt O gemäß Figur 3, Kurve "t-Verlauf bei zweiseitiger Behandlung", wird durch die Steuerung des Gesamtprozesses über die Auswerteeinheit 7, deren Vorgaben und Bedingungen an die Reglereinrichtung 8 und das Steuergerät 9 weitergeben werden, erreicht. Dadurch findet eine Abtötung der Schadorganismen statt, ohne dass die elastomechanischen und chemischen Eigenschaften des Holzes signifikant beeinträchtigt werden. Bei zu behandelnden Objekten, deren Form und Gestalt nicht der eines Rechteckbalkens entspricht, sondern beispielsweise einen Querschnitt nach Fig. 4 aufweist, sind Antennenanordnungen gemäß Fig. 4 oder Hornantennen einsetzbar. Bei weiteren anderen geometrischen Formen lassen sich die Antennenanordnungen, incl. der weiteren Anordnungs- und Verfahrensmerkmale, auch diesen Formen anpassen.

### 2. Dekontamination von biozidbelasteten Objekten und Gütern

Die Bestückung eines Kulturgutes, beispielsweise einer Eichentruhe O, mit Flachantennen erfolgt entsprechend ihrer Größe und Geometrie so, dass die gesendeten Mikrowellen den mit Schadstoffen belasteten, oder terminologisch anders ausgedrückt, den kontaminierten Bereich erreichen, hier mit den Flachantennen 1, 1', 2, 2' gemäß Fig. 2, alternativ mit Hornantennen. Als Mikrowellenquelle werden die Generatoren G 1, G 2 mit Magnetron eingesetzt, wobei natürlich auch jede andere Bauart, z.B. auf Halbleiterbasis, verwendbar ist, da gleichwirkend. Wie bei der weiteren Vorgehensweise unter 1. wird auch hier eine weitestgehend homogene Erwärmung, gem.

Fig. 3, des o.g. Kulturgutes erreicht, bzw. das Erwärmungsprofil so eingestellt, dass es dem Zweck der beabsichtigten Dekontamination des Kulturgutes am besten entspricht. Diese Wirkung der Dekontamination durch Mikrowelleneinsatz bzw. -behandlung wird dadurch erreicht, dass eine geeignete Regelung und Steuerung der Mikrowellenleistung und Einwirkzeit eine definierte Erwärmung an einem definierten Ort bewirkt wird, in deren Folge eine Diffusion der Schad- und Gefahrstoffe, wie z.B. Biozide, aus dem Materialinnern in gleichmäßiger Form an die Oberfläche stattfindet. Diese Diffusion und letztendlich Ausgasung der thermisch mobilisierten Schadstoffe durch den im Innern entstehenden erhöhten Dampfdruck lässt sich temperatur- und zeitabhängig gerade durch diese erfinderische technische Lösung realisieren. Es kann also jede für die Diffusion der Schadstoffe an die Oberfläche und für das Ablagern auf selbiger oder für weiteres Ausgasen notwendige Temperatur an beliebiger Stelle im Kontaminationsbereich erzielt werden, ohne das Material des Kulturgutes zu schädigen, so auch durch schrittweises Abrastern. Die sich an der Objektoberfläche anreichernden Schadstoffe, wie z.B. Biozide, werden im Anschluss an die Ablagerung auf der Oberfläche oder in den oberflächennahen Schichten mittels Wasser, organischer Lösemittel oder Emulsionen in an sich bekannter Weise ab- bzw. ausgewaschen. Ausgasende Biozide werden in bekannter Weise abgesaugt (in den Fig. nicht extra dargestellt) und an Aktivkohle adsorbiert. Auch Lösungsmittelreste von Holzschutzmitteln lassen sich durch die Mikrowelleneinwirkung an die Oberfläche transportieren, von der sie dann abdampfen können. Durch die Beseitigung von Lösungsmittelresten wird beispielsweise eine erneute Kristallisation von im Holz verbliebenen Biozidresten auf der Oberfläche verhindert oder zumindest eingeschränkt. Eine weitere vorteilhafte Wirkung des Mikrowelleneinsatzes auf im Materialinnern enthaltene Biozide besteht darin, dass diese innerhalb eines Objektes in weniger toxische Verbindungen umgewandelt werden können.
Darüber hinaus wurde als weitere vorteilhafte Wirkung des Mikrowelleneinsatzes auf kontaminierte Objekte aus Holz festgestellt, dass damit, die Ausbildung von Biozid-Maskierungsmitteln auf den Oberflächen und die Ausbildung von Sperrschichten gegenüber Bioziden in ihrem Innern verbessert wird. Außerdem lassen sich organische Konsolidierungsmittel erweichen und damit leichter mit Lösungsmitteln entfernen, sowie im Objektinnern nicht ausgehärtete Konsolidierungsmittel in den Endzustand überführen.

## Patentansprüche

1. Anordnung zur Abtötung von holzzerstörenden Insekten und Pilzen und zur Behandlung von schadstoffbelasteten Materialien mit einer flexiblen Verbindungsleitung (10) zwischen einem Magnetron (G1), (G 2) hier auch als Generatoren bezeichnet, und einer die Mikrowellenstrahlung aussendenden Antenne (1), (2) und einem Steuer- (9) sowie Regelgerät (8),
wobei zwei Generatoren (G 1), (G 2) mit steuerbarer Ausgangsleistung Antennen (1), (1'), (2), (2') direkt zugeordnet sind, wobei diese Antennen (1), (1'), (2), (2') sich am zu bestrahlenden Objekt (O) auf jeweils gemeinsamen Linien (4), die die zwei Antennenachsen (5), (5') zusammenfallend bilden, direkt gegenüberstehen und wobei sie gegeneinander gerichtet, somit gegeneinander strahlend, angeordnet sind, **dadurch gekennzeichnet dass** ein oder mehrere Temperatursensoren (6) im zu bestrahlenden Objekt (O) angeordnet und einer Auswerteeinheit (7) zugeschaltet sind.

2. Anordnung zur Abtötung von holzzerstörenden Insekten und Pilzen und zur Behandlung von schadstoffbelasteten Materialien mit einer flexiblen Verbindungsleitung (10) zwischen einem Magnetron (G1), (G 2) hier auch als Generatoren bezeichnet, und einer die Mikrowellenstrahlung aussendenden Antenne (1), (2), (3) und einem Steuer- (9) sowie Regelgerät (8),
wobei mehreren Generatoren (G 1), (G 2), (G n) mit steuerbarer Ausgangsleistung mehrere Antennen (1), (2), (3), (n) direkt zugeordnet sind, wobei diese Antennen (1), (2), (3), (n) sich am zu bestrahlenden Objekt (O) winklig zueinander gegenüberstehen, wobei dann der zwischen den Achsen (5) der Antennen (1), (2), (3), (n) entstehende Winkel (α) sich aus 360° geteilt durch die Anzahl der am zu bestrahlenden Objekt angeordneten Antennen ergibt, somit bei drei sich gegenüberstehende Antennen (1), (2), (3) ein Winkel (α) von 120° und bei vier sich jeweils paarweise gegenüberstehende Antennen (1), (2), (3), (4) ein Winkel (α) von 90° vorliegt, wobei diese Antennen (1), (2), (3), (n) winklig gegeneinander gerichtet, somit winklig gegeneinander strahlend angeordnet sind, **dadurch gekennzeichnet dass** ein oder mehrere Temperatursensoren (6) im zu bestrahlenden Objekt (O) angeordnet und einer Auswerteeinheit (7) zugeschaltet sind.

3. Anordnung nach Anspruch 1 und 2,
**dadurch gekennzeichnet,**
**dass** die das/die Signal(e) des/der Temperatursensors/en empfangende Auswerteeinheit (7) auf eine Reglereinrichtung (8), diese Reglereinrichtung (8) auf ein Steuergerät (9) und dieses Steuergerät (9) auf die Generatoren (G 1), (G 2), (G n) geschaltet sind, zum Zwecke der Einwirkung auf die Generatoren (G 1), (G 2), (G n), um einen vorgegebenen Temperaturbereich im Innern des bestrahlten Objektes (O) zu erreichen.

4. Anordnung nach Anspruch 1 und 2,
**dadurch gekennzeichnet,**
**dass** die eine Mikrowellenleistung gerichtet abgebenden Antennen (1), (2), (3), (n) als Hornstrahler, als Slotantennen, als Flachantennen oder als Antennen beliebiger Bauart ausgebildet sein können.

5. Anordnung nach Anspruch 1 und 2,
**dadurch gekennzeichnet,**
**dass** ein Anzeigeorgan zur Statusanzeige betreffend die Generatoren in diesen angeordnet ist.

6. Verfahrensweise zur Abtötung von holzzerstörenden Insekten und Pilzen und zur Behandlung von schadstoffbelasteten Materialien
**dadurch gekennzeichnet,**
**dass** unter Anwendung der Anordnungsmerkmale nach dem Anspruch 1 und dem Anspruch 2 eine gegeneinander arbeitende Mikrowellenausstrahlung derart vorgenommen wird, dass eine zeitlichen Asynchronität, die das Steuergerät (9) bewirkt, mit einer Timesharing-Ansteuerung der Generatoren (G 1), (G 2), (G n) durch netzsynchrone Ansteuerung im Halbwellenbetrieb, angewandt wird, wobei eine gegenseitige Hochfrequenzbeeinflussung der Generatoren (G 1), (G 2), (G n) durch die Steuerungsschritte der Steuereinrichtung (9) gezielt ausgeschlossen wird und dass eine Temperatureinstellung in gewünschtem Profil und gewünschter Höhe im bestrahlten Objekt (O) durch die Auswerteeinheit (7), deren Vorgaben und Bedingungen weitergebend an die Reglereinrichtung (8) und das Steuergerät (9), vorgenommen wird.

7. Verfahrensweise nach Anspruch 6
**dadurch gekennzeichnet,**
**dass** die Mikrowellenleistung vermittels der Steuerelektronik gestuft oder stufenlos einstellbar abgegeben wird.

8. Verfahrensweise nach Anspruch 6 und 7
**dadurch gekennzeichnet,**
**dass** eine Mikrowelleneinwirkung an den Materialien, Objekten und Gütern zum Zwecke ihrer Dekontamination vorgenommen wird und dass im Zuge der Mikrowelleneinwirkung die frei gesetzten Schadstoffe aus- oder abgewaschen und/oder adsorptiv gebunden werden.

## Claims

1. System for killing wood-destroying insects and mushrooms and for treating infected materials with a flexible connecting line (10) between a magnetron (G 1), (G 2), here referred to also as generators, and an aerial emitting the microwave radiation (1), (2) and a control device (9) and regulating device (8), wherein two generators (G 1), (G 2) with controllable output power are assigned directly to aerials (1), (1'), (2), (2'), with these aerials (1), (1'), (2), (2') standing directly opposite each other at the object to be irradiated (O) on two common lines (4) each formed by the coincidence of two aerial axes (5), (5'), such that they are arranged facing each other and thus radiating towards each other,
**characterised by**
one or several temperature sensors (6) being arranged in the object to be irradiated (O) and connected to an evaluation unit (7).

2. System for killing wood-destroying insects and mushrooms and for treating infected materials with a flexible connecting line (10) between a magnetron (G 1), (G 2), here referred to also as generators, and an aerial emitting the microwave radiation (1), (2), (3) and a control device (9) and regulating device (8), wherein several generators (G 1), (G 2), (G n) with controllable output power are assigned directly to several aerials (1), (2), (3), (n), with these aerials (1), (2), (3), (n) standing at an angle to each other at the object to be irradiated (O), such that the angle (α) arising between the axes (5) of the aerials (1), (2), (3), (n) is derived from the division of 360° by the number of aerials arranged at the object to be irradiated, the angle (α) thus being 120° where three aerials (1), (2), (3) are present or else 90° where four aerials (1), (2), (3), (4) are arranged to stand opposite each other in pairs, whereby these aerials (1), (2), (3), (n) face each other at angles and thus radiate at an angle to each other,
**characterised by**
one or several temperature sensors (6) being arranged in the object to be irradiated (O) and connected to an evaluation unit (7).

3. System in accordance with claims 1 and 2,
**characterised by**
the evaluation unit (7) receiving the signal(s) of the temperature sensor(s) being connected to a regulating device (8), this regulating device (8) being connected to a control device (9) and this control device (9) being connected to the generators (G 1), (G 2), (G n), the purpose being to exert an influence on the generators (G 1), (G 2), (G n), in order to achieve a specified temperature range in the inner of the irradiated object (O).

4. System in accordance with claims 1 and 2,
**characterised by**
the aerials for directional emission of a microwave power (1), (2), (3), (n) being able to take the form of horn radiators, slot aerials, flat aerials or aerials of any other type.

5. System in accordance with claims 1 and 2,
**characterised by**
a display element to display the status of the generators being arranged in these generators.

6. Method for killing wood-destroying insects and mushrooms and for treating infected materials
**characterised by**
opposed microwave radiation being effected in an arrangement with properties in accordance with claim 1 and claim 2 in such a form that a timing asynchronism produced by the control device (9) is applied, with time-sharing control of the generators (G 1), (G 2), (G n) through mains-synchronous control in half-wave mode, wherein mutual highfrequency interference between the generators (G 1), (G 2), (G n) is specifically excluded by way of the control steps of the control device (9), and in such a form that a temperature setting with a desired profile and desired level is effected in the irradiated object (O) by way of the evaluation unit (7) and the latter's specifications and conditions being passed on to the regulating device (8) and the control device (9).

7. Method in accordance with claim 6
**characterised by**
the microwave power being emitted at a graduated or stepless level set by way of the control electronics.

8. Method in accordance with claims 6 and 7
**characterised by**
materials, objects and goods being exposed to microwave radiation for the purpose of decontamination and by the liberated contaminants being washed out or off and/or bound by adsorption during the course of the microwave exposure.

## Revendications

1. Système pour éliminer les insectes et champignons destructeurs du bois et pour traiter les matériaux infectés avec une conduite de raccordement flexible (10) entre un magnétron (G1), (G 2) également appelé ici génératrices, et une antenne émettant le rayonnement de micro-ondes (1), (2) et un appareil de commande (9) ainsi que de régulation (8), deux génératrices (G 1), (G 2) à puissance de sortie réglable étant directement attribuées aux antennes (1), (1'), (2), (2'), lesquelles antennes (1), (1'), (2), (2') se font directement face à l'endroit de l'objet à irradier (O) sur des lignes respectivement communes (4) que les deux axes d'antennes (5), (5') forment par coïncidence, et celles-ci étant disposées face à face, émettant ainsi des rayonnements antagonistes
**caractérisé en ce que**,
un ou plusieurs détecteurs de température (6) sont disposés dans l'objet à irradier (O) et connectés à une unité d'interprétation (7).

2. Système pour éliminer les insectes et champignons destructeurs du bois et pour traiter les matériaux infectés avec une conduite de raccordement flexible (10) entre un magnétron (G1), (G 2) également appelé ici génératrices, et une antenne émettant le rayonnement de micro-ondes (1), (2), (3) et un appareil de commande (9) ainsi que de régulation (8), plusieurs génératrices (G 1), (G 2), (G n) à puissance de sortie réglable étant directement attribuées à plusieurs antennes (1), (2), (3), (n), lesquelles antennes (1), (2), (3), (n) se font face à l'endroit de l'objet à irradier (O) sous un angle déterminé, l'angle (α) qui se forme alors entre les axes (5) résultant de 360° divisé par le nombre des antennes disposées à l'objet à irradier, suite de quoi les trois antennes se faisant face (1), (2), (3) forment un angle (α) de 120° et, dans le cas de quatre antennes (1), (2), (3), (4) se faisant face respectivement par paires, un angle (α) de 90°, ces antennes (1), (2), (3), (n) étant orientées en angle les unes par rapport aux autres et ainsi disposées rayonnant en angle les unes vis à vis des autres
**caractérisé en ce que**
un ou plusieurs détecteurs de température (6) sont disposés dans l'objet à irradier (O) et connectés à une unité d'interprétation (7).

3. Système selon les revendications 1 et 2,
**caractérisé en ce que**
l'unité d'interprétation (7) recevant le signal ou les signaux du ou des détecteur(s) de température est commutée avec un dispositif de régulation(8), lequel dispositif de régulation (8) est commuté avec un appareil de commande (9), appareil de commande (9) qui est commuté avec les génératrices (G 1), (G 2), (G n), afin d'agir su8r les génératrices (G 1), (G 2), (G n), pour obtenir une plage de températures donnée à l'intérieur de l'objet irradié (O).

4. Système selon les revendications 1 et 2,
**caractérisé en ce que**
les antennes émettant un débit orienté de micro-ondes (1), (2), (3), (n) peuvent prendre une forme d'émetteur cornu, d'antenne fendue, d'antenne plate ou d'antenne de n'importe quel type de construction.

5. Système selon les revendications 1 et 2,
**caractérisé en ce qu'**un
organe de visualisation pour l'affichage d'état concernant les génératrices est disposé dans celles-ci.

6. Méthode pour éliminer les insectes et champignons destructeurs du bois et pour traiter les matériaux infectés
**caractérisé en ce qu'**
une irradiation à l'aide de micro-ondes travaillant face à face, générée en mettant à profit les caractéristiques de disposition conformes à la revendication 1 et à la revendication 2, est utilisée de manière telle qu'un asynchronisme dans le temps causé par l'appareil de commande (9), est utilisé avec une excitation en temps partagé des génératrices (G 1), (G 2), (G n) par excitation synchrone avec le réseau en fonctionnement demi-ondes, une influence réciproque en haute fréquence des génératrices (G 1), (G 2), (G n) étant exclue de manière appropriée par les séquences de commande du dispositif de commande (9), et que le réglage de la température dans l'objet irradié (O) au profil souhaité et à la hauteur voulue est pris en charge par l'unité d'interprétation (7), dont les valeurs allouées et conditions sont communiquées au dispositif de régulation (8) et à l'appareil de commande (9).

7. Méthode selon la revendication 6
**caractérisée en ce que**
l'irradiation à l'aide de micro-ondes est effectuée réglable graduellement ou en continu moyennant l'électronique de commande.

8. Méthode selon les revendications 6 et 7
**caractérisée en ce qu'**un
traitement aux micro-ondes est effectué sur les matières, objets et biens afin de les décontaminer et que les substances nocives émises au cours de l'action des micro-ondes peuvent être éliminées par lavage et/ou fixés par voie d'absorption.
